# EUROPÄISCHE PATENTSCHRIFT

(11) **EP 0 958 212 B1**
(45) Veröffentlichungstag und Bekanntmachung des Hinweises auf die Patenterteilung: **05.12.2001**
(21) Anmeldenummer: 98907864.7
(22) Anmeldetag: 26.01.1998
(51) Int. Cl.: B65G 47/38, B65G 47/96

(54) **FÖRDERSYSTEM ZUM AUTOMATISCHEN TRANSPORT VON FÖRDERGUT**
CONVEYOR SYSTEM FOR AUTOMATIC CONVEYANCE OF ITEMS
SYSTEME CONVOYEUR POUR LE TRANSPORT AUTOMATIQUE D'ARTICLES

(30) Priorität: 07.02.1997 DE 19704701
(43) Veröffentlichungstag der Anmeldung: 24.11.1999
(73) Patentinhaber: Siemens Dematic AG, 90475 Nürnberg (DE)
(72) Erfinder: VITALINI, Michele, D-90491 Nürnberg (DE); HERCHENBACH, Franz-Josef, D-91074 Herzogenaurach (DE); GRAEFER, Dominik, D-90518 Altdorf (DE)
(74) Vertreter: Zedlitz, Peter, Dipl.-Inf.
(86) Internationale Anmeldenummer: DE9800234
(87) Internationale Veröffentlichungsnummer: WO9834859

(56) Entgegenhaltungen:
- WO-A-90/09944
- US-A- 5 018 928

## Beschreibung

Die Erfindung bezieht sich auf ein Fördersystem zum automatischen Transport von Fördergut, insbesondere Postgut, entlang einer Förderstrecke mittels Fahrzeugverbänden, wobei die Fahrzeuge zur Stückgutaufnahme waagerecht stabil positionierbare Ladungsträger aufweisen, die zur Stückgutentladung an vorgegebenen Entladestellen mit einem Fühlhebel horizontal in eine seitlich der Förderstrecke angeordnete Leitschiene eingreifen, wodurch der Fühlhebel bei Weiterfahrt des Fahrzeugverbands eine vertikale Auslenkung erfährt, die über eine mechanische Umlenkung ein Kippen des Ladungsträgers in eine von zwei stabilen Kippositionen bewirkt, und wobei auch das Rückstellen der gekippten Ladungsträger über die Fühlhebel und spezifisch ausgebildete Leitschienen erfolgt.

Zum Transport und Vereinzeln von Stückgut haben sich seit langem sogenannte Kippschalensorter bewährt. Das Fördergut wird dabei von spurgeführten Fahrzeugen aufgenommen, die an ihrer Oberseite Ladungsträger aufweisen, die zum Ladungstransport waagerecht gehalten sind und die zum Ladungsabwurf kippbar sind.

Ein Fördersystem der eingangs genannten Art ist dabei aus der WO 90/09944 bekannt. Bei diesem System werden Fahrzeugverbände aus Fahrzeugen ohne eigene Antriebe gebildet und alle aktiven Funktionen werden über Streckeneinrichtungen ausgelöst.

Aus der US-PS 50 18 928 ist ferner ein Kippschalensorter mit aktivem Zugfahrzeug für sich automatisch auf einem Gleissystem bewegende Fahrzeugverbände, bestehend aus einer Lokomotive und mehreren Wagons, bekannt, wobei jeder Wagon eine kippbare Ladefläche aufweist. Zum Kippen dieser Ladeflächen werden ausrückbare Hebel eingesetzt, die über Magnete in ihre aktive Stellung gebracht werden können.

Aufgabe der Erfindung ist es, die Schaffung eines Fördersystems der eingangs genannten Art mit einer aufwandsarmen und sicheren Fühlhebelanordnung zum Kippen der Ladungsträger.

Gemäß der Erfindung wird diese Aufgabe dadurch gelöst, daß mindestens ein Fahrzeug des Fahrzeugverbands einen eigenen Antrieb aufweist und daß in der stabilen waagerechten Ladungsträgerposition der Fühlhebel außerhalb der Eingreifbereiche der Leitschienen befindlich ist und erst nach Betätigen eines aktiven Ausrückelements auf dem Fahrzeug in den Eingreifbereich gelangt.

Dadurch, daß Antrieb und Ausrückelement von einer gemeinsamen Energiequelle, beispielsweise vom elektrischen Strom des Systems, speisbar sind, ergibt sich eine äußerst einfache Realisierungsmöglichkeit.

Dadurch, daß jeweils nur ein einziger Fühlhebel in einer E-förmigen Kulisse am jeweiligen Fahrzeug geführt ist, wobei der obere und der untere Schenkel jeder Kulisse jeweils eine der beiden stabilen Kippositionen und der mittlere Schenkel die stabile waagerechte Position definiert, kann mit einem einzigen Fühlhebel ein Kippen zu zwei Seiten erreicht werden.

Ein Ausführungsbeispiel der Erfindung ist in der Zeichnung dargestellt und wird im folgenden näher erläutert. Dabei zeigen:
- FIG 1: die Anordnung aller wesentlichen Komponenten eines Fahrzeugs mit Ladungsträger und
- FIG 2 bis 6: demgegenüber vereinfachte Darstellungen für fünf signifikante Betriebszustände.

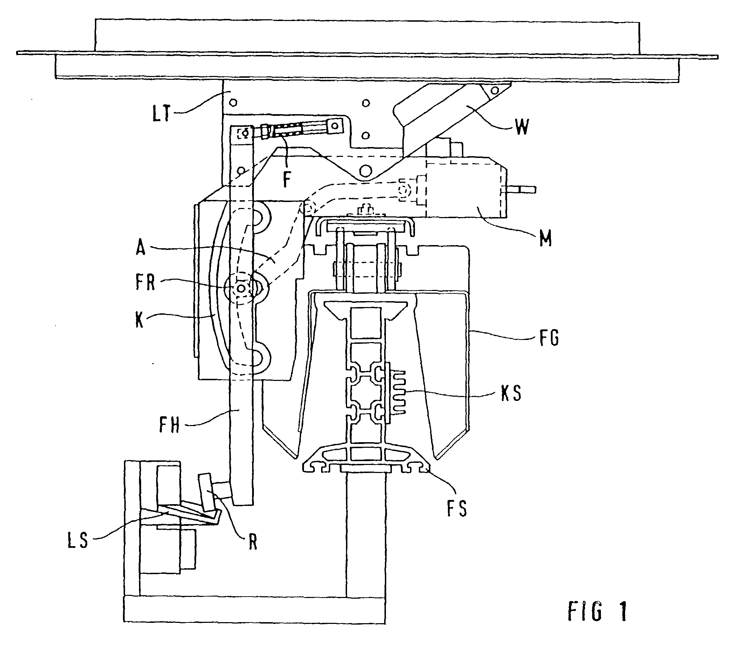

In der Darstellung gemäß FIG 1 ist im Schnitt eine Fahrschiene FS gezeigt, die näherungsweise eine Doppel-T-Struktur aufweist. Die einander zugewandten angeschrägten Flanken der Doppel-T-Strukturen dienen dabei als Fahrspuren, für der Übersichtlichkeit halber nicht dargestellte Räder von längs der Fahrschiene FS beweglichen Fahrzeugen. Dabei ist das Fahrgestell FG eines solchen Fahrzeugs angedeutet, das somit formschlüssig durch die Fahrschiene FS geführt wird.

Über Kontaktschienen KS kann elektrische Energie von der Fahrschiene FS zum Fahrzeüg über ebenfalls der Übersichtlichkeit halber nicht dargestellte Schleifstücke oder Kontaktrollen übertragen werden.

Das Fahrgestell FG trägt über eine Wippe W einen Ladungsträger LT. Wesentlich für die Erfindung ist nun das Arretieren und Betätigen dieser Wippe W. An der Wippe ist dazu ein zweiarmiger Fühlhebel FH vorgesehen, der in einer am Fahrgestell FG fixierten E-förmigen Kulisse K geführt ist. Über eine Feder F, die am kurzen Hebel des Fühlhebels FH einen Druck ausübt, wird der Fühlhebel FH in Richtung der freien Schenkel der E-förmigen Kulisse K vorgespannt. Am Fahrgestell FG ist jedoch ferner ein Magnet M vorgesehen, der dann, wenn er von einem Strom angesteuert wird, gegen eine Führungsrolle FR, die den Fühlhebel FH in der Kulisse K führt, gepreßt wird, so daß der Fühlhebel FH in die gemäß FIG 1 gezeigte Position verbracht wird. In eben dieser Position kann eine Rolle R am Fühlhebel FH in eine Leitschiene LS eingreifen, die stationär zur Fahrschiene FS angeordnet ist. Der resultierende Kippvorgang für eine der beiden Kipprichtungen wird anhand der folgenden Figuren dargestellt, wobei dort der Übersichtlichkeit halber Magnet M, Auswerfer A und Ladungsträger LT nicht dargestellt sind.

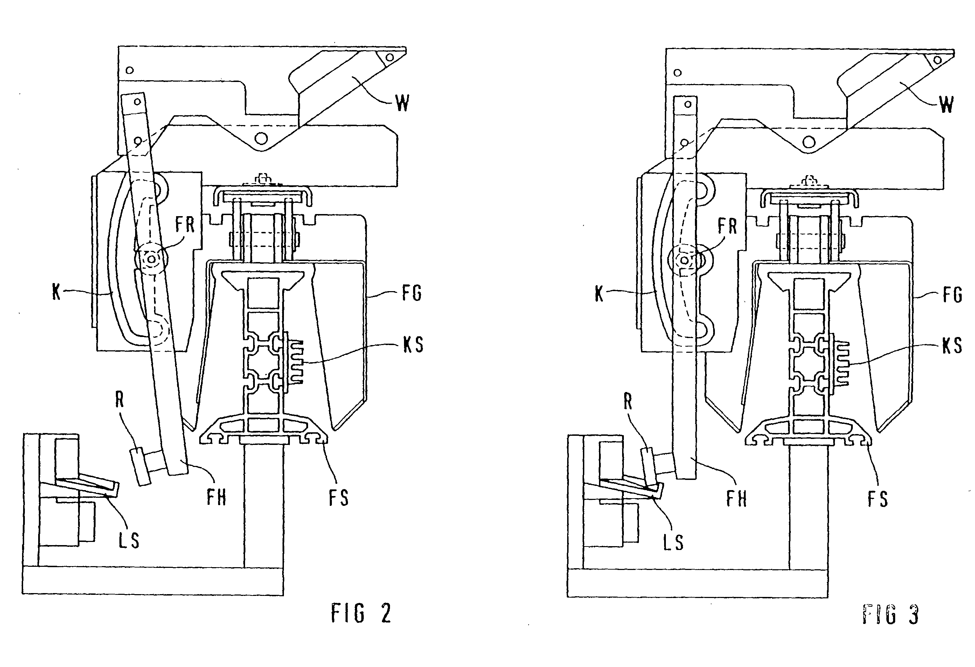

In der Darstellung gemäß FIG 2 ist die Position des Fühlhebels FH gezeigt, die dieser dann einnimmt, wenn der Magnet M (FIG 1) nicht über den Auswerfer A (FIG 1) auf die Führungsrolle FR einwirkt. Diese befindet sich dann am äußersten Ende des mittleren Schenkels der E-förmigen Kulisse K, was bewirkt, daß die Rolle R am äußersten Ende des Fühlhebels FH mit Sicherheit nicht in den Eingriff einer Leitschiene LS gelangen kann.

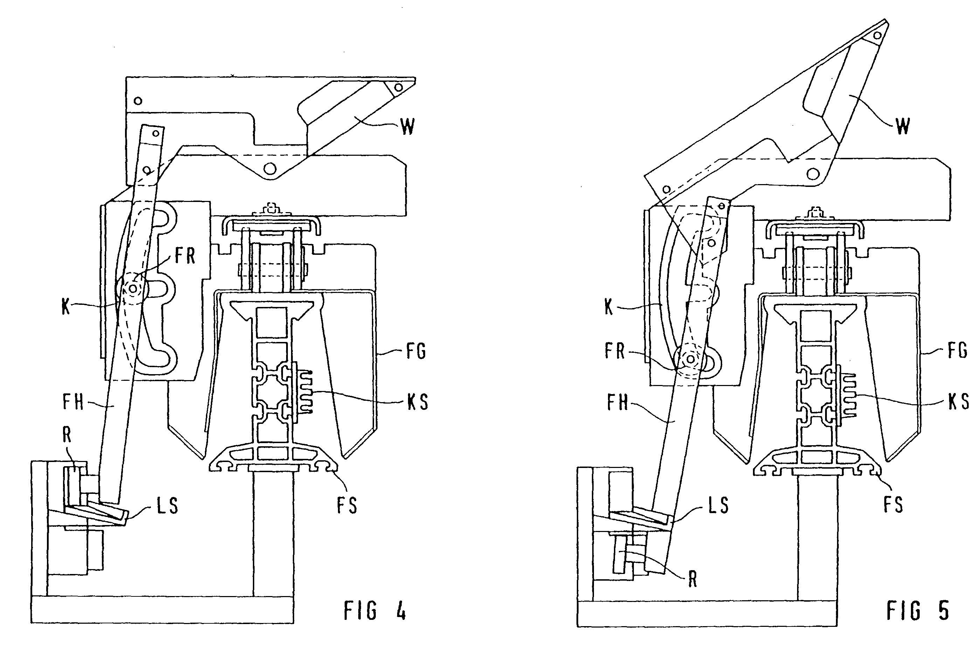

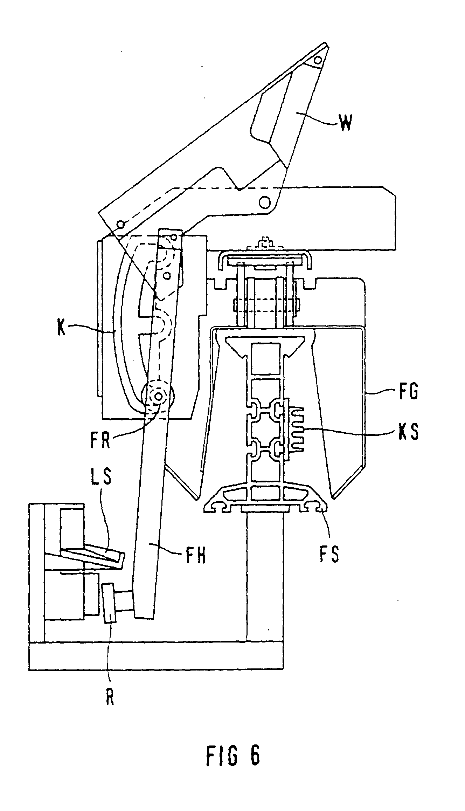

In der Darstellung gemäß FIG 3 sei nun angenommen, daß ebenso wie in der Darstellung gemäß FIG 1 eine Erregung des Magneten M (FIG 1) vorliegt, wodurch der Auswerfer A (FIG 1) die Führungsrolle FR zwar im Bereich des mittleren Schenkels der Kulisse K bewegt, jedoch noch nicht aus seinem Arretierbereich heraus freigibt. Damit sind die Wippe W und damit der Ladungsträger LT (FIG 1) noch in der waagerechten Position fixiert und Ladungsgut kann noch nicht abgekippt werden. Jedoch besteht nun die Möglichkeit, daß eine Leitschiene LS die Rolle R einfängt, wodurch bei Weiterfahrt des Fahrzeugs die Rolle R auslenkt, wie dies in der Darstellung gemäß FIG 4 gezeigt ist. Ein solches seitliches Auslenken führt dazu, daß die Führungsrolle FR nicht mehr durch einen Schenkel der Kulisse K gesperrt ist und daß bei einer weiteren Fortbewegung des Fahrzeugs die Rolle R vertikal im Beispiel nach unten bewegt wird, so daß sie die in FIG 5 angedeutete Stellung erreicht. Die Wippe W ist dabei nach links gekippt und Ladungsgut ist abgeworfen worden. Aufgrund der Federspannung der Feder F (FIG 1) wird bei Erreichen des unteren Schenkels der E-förmigen Kulisse die Führungsrolle FR in eben diesen Schenkel einlaufen und der Fühlhebel FH befindet sind in der in FIG 6 gezeigten Position. In dieser Position ist anders als in der waagerechten Position stets eine Einfangbereitschaft für folgende Leitschienen längs der Strecke gewährleistet.

Prinzipiell könnte auch in den beiden Kippositionen durch verlängerte obere und untere Schenkel der E-förmigen Kulisse K der Fühlhebel FH aus dem Eingriffsbereich für die Leitschienen LS herausgehalten werden und nur über Betätigung des Magneten M (FIG 1) in den Einfangbereich der Leitschienen LS verbracht werden, jedoch ist diese zusätzliche Sperrmaßnahmen, zwar bei waagerechten gestellten Ladungsträgern LT (FIG 1) erforderlich, damit mit Gewißheit nicht ein ungewolltes Abkippen von Ladung verursacht wird, jedoch ist für die schräggestellten Ladungsträger LT (FIG 1) eine derartige Maßnahme deswegen, weil kein Ladungsgut versehentlich abgekippt werden könnte, nicht unbedingt erforderlich.

## Patentansprüche

1. Fördersystem zum automatischen Transport von Fördergut, insbesondere Postgut, entlang einer Förderstrecke mittels Fahrzeugverbänden, wobei die Fahrzeuge zur Stückgutaufnahme waagerecht stabil positionierbare Ladungsträger (LT) aufweisen, die zur Stückgutentladung an vorgegebenen Entladestellen mit einem Fühlhebel (FH) horizontal in eine seitlich der Förderstrecke angeordnete Leitschiene (LS) eingreifen, wodurch der Fühlhebel (FH) bei Weiterfahrt des Fahrzeugverbands eine vertikale Auslenkung erfährt, die über eine mechanische Umlenkung ein Kippen des Ladungsträgers (LT) in eine von zwei stabilen Kippositionen bewirkt, und wobei auch das Rückstellen der gekippten Ladungsträger (LT) über die Fühlhebel (FH) und spezifisch ausgebildete Leitschienen (LS) erfolgt, wobei mindestens ein Fahrzeug des Fahrzeugverbands einen eigenen Antrieb aufweist und in der stabilen waagerechten Ladungsträgerposition der Fühlhebel (FH) außerhalb der Eingreifbereiche der Leitschienen (LS) befindlich ist und erst nach Betätigen eines aktiven Ausrückelements (M) auf dem Fahrzeug in den Eingreifbereich gelangt, **dadurch gekennzeichnet, daß** jeweils nur ein einziger Fühlhebel (FH) in einer E-förmigen Kulisse (K) am jeweiligen Fahrzeug geführt ist, wobei der obere und der untere Schenkel jeder Kulisse (K) jeweils eine der beiden stabilen Kippositionen und der mittlere Schenkel die stabile waagerechte Position definiert.

2. Fördersystem nach Anspruch 1, **dadurch gekennzeichnet, daß** Antrieb und Ausrückelement (M) von einer gemeinsamen Energiequelle speisbar sind.

## Claims

1. Conveying system for the automatic transfer of goods to be conveyed, especially mail, along a conveying section by means of vehicle formations, the vehicles having load carriers (LT) that can be positioned horizontally in a stable manner for the purpose of accepting unit loads and, for the purpose of unloading the unit loads at specified unloading points, engage horizontally by means of a feeler (FH) in a guide rail (LS) arranged to the side of the conveying section, as a result of which the feeler (FH) undergoes a vertical displacement as the vehicle formation travels onward, this displacement causing tipping of the load carrier (LT) into one of two stable tipping positions by way of a mechanical deflection, and the return of the tipped load carriers (LT) also being accomplished by means of the feelers (FH) and specially designed guide rails (LS), at least one vehicle of the vehicle formation having its own drive and, in the stable horizontal position of the load carrier, the feeler (FH) being outside the regions of engagement of the guide rails (LS) and only entering the region of engagement upon actuation of an active disengagement element (M) on the vehicle, **characterized in that** in each case only a single feeler (FH) is guided in an E-shaped slotted guide (K) on the respective vehicle, the upper and the lower arm of each slotted guide (K) each defining one of the two stable tipping positions, and the central arm defining the stable horizontal position.

2. Conveying system according to Claim 1, **characterized in that** the drive and the disengagement element (M) can be supplied from a common power source.

## Revendications

1. Système convoyeur pour le transport automatique d'articles, notamment d'articles postaux, le long d'un parcours de transport au moyen de groupes de véhicules, les véhicules comportant pour recevoir les articles des supports (LT) de charge qui peuvent être placés en position horizontale stable et qui, pour décharger les articles en des lieux de déchargement prescrits, s'engagent horizontalement par un levier (FH) palpeur dans un rail (LS) de guidage disposé sur le côté du parcours de transport, de sorte que le levier (FH) palpeur, tandis que le groupe de véhicules continue à se déplacer, subit une déviation verticale qui, par l'intermédiaire d'un renvoi mécanique, produit un basculement du support (LT) de charge dans l'une de deux positions basculées stables, et le rappel des supports (LT) de charge basculés s'effectuant également au moyen des leviers (FH) palpeurs et des rails (LS) de guidage de conception spécifique, au moins un véhicule du groupe de véhicules comportant un propre entraînement et le levier (FH) palpeur se trouvant, dans la position stable horizontale du support de charge, en dehors des zones d'engagement des rails (LS) de guidage et n'arrivant dans la zone d'engagement qu'à la suite de l'actionnement d'un élément (M) actif de débrayage sur le véhicule, **caractérisé en ce qu'**un seul et unique levier (FH) palpeur est chaque fois guidé sur le véhicule respectif dans une coulisse (K) en forme de E, la branche supérieure et la branche inférieure de chaque coulisse (K) définissant chacune une des deux positions basculées stables, tandis que la branche médiane définit la position stable horizontale.

2. Système convoyeur suivant la revendication 1, **caractérisé en ce que** l'entraînement et l'élément (M) de débrayage peuvent être alimentés par une source d'énergie commune.
